# EUROPÄISCHE PATENTSCHRIFT

(11) **EP 0 886 658 B1**
(45) Veröffentlichungstag und Bekanntmachung des Hinweises auf die Patenterteilung: **05.09.2001**
(21) Anmeldenummer: 97903369.3
(22) Anmeldetag: 25.02.1997
(51) Int. Cl.: C08F 20/14

(54) **MEHRSTUFIGES VERFAHREN ZUR HERSTELLUNG VON HOCHWÄRMEFORMBESTÄNDIGEN POLYMETHACRYLAT-FORMMASSEN**
MULTI-STAGE PROCESS FOR PRODUCING HEAT RESISTANT DIMENSIONALLY STABLE POLYMETHACRYLATE MOULDING COMPOUNDS
PROCEDE EN PLUSIEURS ETAPES POUR PRODUIRE DES MATIERES DE MOULAGE EN POLYMETHACRYLATE THERMOSTABLE

(30) Priorität: 13.03.1996 DE 19609715
(43) Veröffentlichungstag der Anmeldung: 30.12.1998
(73) Patentinhaber: Röhm GmbH & Co. KG, 64293 Darmstadt (DE)
(72) Erfinder: SIOL, Werner, D-64297 Darmstadt (DE); VETTER, Heinz, D-64380 Ro dorf (DE); WICKER, Michael, D-64342 Seeheim-Jugenheim (DE)
(86) Internationale Anmeldenummer: EP9700884
(87) Internationale Veröffentlichungsnummer: WO9733925

(56) Entgegenhaltungen:
- GB-A- 1 013 688
- JP-A- 59 210 911

## Beschreibung

Die Erfindung betrifft ein Verfahren zur Herstellung von Polymethacrylat-Formmassen mit hoher Wärmeformbeständigkeit und hoher Stabilität gegen thermischen Abbau, wobei in einer ersten Reaktorstufe eine Polymerisation bei weniger als 120 °C erfolgt und eine zweite bzw. weitere Reaktorstufe(n) in einem Temperaturbereich zwischen 130 und 200 °C betrieben wird bzw. werden. In einer darauffolgenden Entgasungsstufe werden abgetrennte Restmonomere dem Verfahren wieder zugeführt. Gleichzeitig wird die Formmasse ausgetragen.

### Stand der Technik

Polymethacrylat-Formmassen werden in der Regel durch diskontinuierliche oder kontinuierliche Substanzpolymerisation sowie durch Perlpolymerisation hergestellt. Das diskontinuierliche Verfahren, das bei niedrigen Temperaturen, beispielsweise zwischen 20 und 50 °C, durchgeführt wird, ist sehr zeit- und arbeitsintensiv, weshalb es in neuerer Zeit zunehmend durch kontinuierliche, technisch jedoch aufwendige Polymerisationsverfahren fast vollständig abgelöst wurde.

Die kontinuierliche Polyrnerisation wird beispielsweise in einer Zone steigender Temperaturen von 130 bis 250 °C in einer als Extruder ausgeführten Polymerisationsanlage durchgeführt. Vor der Isolierung des Polymerisats als Extrudat wird in einer Entgasungszone nicht umgesetztes Monomeres, dessen Anteil bis zu 40 Gew.-% des eingesetzten Monomeren sein kann, abgezogen und der Polymerisation wieder zugeführt.

Zur Erreichung hoher Raum-Zeit-Ausbeuten wird die Polymerisation üblicherweise bei Temperaturen um 100 °C und in Gegenwart von relativ hohen Initiatorkonzentrationen durchgeführt (vgl. beispielsweise Vieweg, Esser, Kunststoff-Handbuch, Band IX, Seiten 22 bis 35, Carl Hanser Verlag, München, 1975 oder Ullmanns Enzyklopädie der technischen Chemie, 4. Auflage, Band 19, Seiten 22 bis 27, Verlag Chemie, Weinheim, 1980). Darüberhinaus ist die Herstellung von Polymethacrylat-Formmassen durch Lösungspolymerisation und nachfolgendes Abdampfen des Lösungsmittels bekannt.

Im allgemeinen wird zur Stabilisierung gegen den thermischen Abbau von Polymethacrylat-Formmassen das Methacrylat mit wenigen Prozenten eines Acrylsäureesters oder mit Styrol copolymerisiert.

Polymerisationsverfahren zur Herstellung thermoplastisch verarbeitbarer Polymethacrylat-Formmassen werden im allgemeinen in Gegenwart von Übertragungsreglem, insbesondere in Gegenwart von Mercaptanen, durchgeführt, die als Kettenabbruchregler in den Polymerisationsmechanismus eingreifen und so den Polymerisationsgrad und die chemische Struktur der Polymerendgruppen beeinflussen. Mit den Mercaptanen als den bekanntesten Reglern entstehen so im allgemeinen Polymerisate, die eine höhere Zahl an thermisch stabileren Endgruppen besitzen als ungeregelt hergestellte Polymethacrylate (siehe z. B. DE-PS 16 45 232). Die Natur der Endgruppe ist für die thermische Stabilität von Polymethacrylat-Formmassen von besonderer Bedeutung.

So konnte in Modellversuchen gezeigt werden, daß Polymethylmethacrylat-Polymerketten mit gesättigten Endgruppen, wie sie durch Übertragung gebildet werden, bis zu Temperaturen von mehr als 300 °C stabil sind, während Polymerketten, die duch Disproportionierungsabbruch gebildet worden sind und demzufolge eine olefinische Doppelbindung am Kettenende aufweisen, bereits bei ca. 250 °C thermisch abgebaut werden [P. Cacioli et al., Polymer Bulletin 11, 325 (1984)]. Polymethylmethacrylat (PMMA)-Polymerketten, die durch Rekombinationsabbruch entstanden sind, sind nur bis ca. 190 °C thermisch stabil.

Zur Erzielung einer befriedigenden thermischen Stabilisierung wird vorteilhafterweise der Einbau von Acrylsäureestern und die Polymerisation in Gegenwart von Mercaptanen bei den technischen Herstellungsverfahren von Polymethacrylat-Formmassen kombiniert, wobei darüberhinaus zur besseren Verarbeitung niedermolekulare Stabilisatoren zugesetzt werden.

Die Wärmeformbeständigkeit von Polymethacrylat-Formmassen, die beispielsweise durch die Glasübergangstemperatur Tg oder die Vicat-Erweichungstemperatur VST nach ISO 306 definiert sein kann, wird maßgeblich durch die Taktizität der Polymethacrylat-Polymerketten, die sich in Abhängigkeit vom Polymerisationsverfahren in weiten Grenzen variieren läßt, beeinflußt. Technisch erwünscht sind hohe Anteile an syndiotaktischen und heterotaktischen Triaden, die zu Formmassen mit hoher Wärmeformbeständigkeit führen. Unerwünscht sind hingegen hohe Anteile an isotaktischen Triaden in den Polymerketten, weil diese einer hohen Wärmeformbeständigkeit entgegenwirken.

Bei niedrigen Polymerisationstemperaturen werden vorwiegend die gewünschten syndiotaktischen Triaden in den Polymerketten erhalten, wobei bei solchen Polymerisationsverfahren zur Erzielung hoher Raum-Zeit-Ausbeuten vergleichsweise hohe Initiatorkonzentrationen verwandt werden müssen. Dadurch entstehen vermehrt Polymerketten, die, wie schon ausgeführt, durch einen Rekombinationsabbruch oder Disproportionierungsabbruch terminiert werden und damit eine geringere Thermostabilität besitzen. Andererseits erreicht man mit der Polymerisation bei erhöhten Temperaturen, beispielsweise in einem kontinuierlichen Polymerisationsverfahren bei etwa 180 °C bereits mit relativ geringen Mengen an Initiator, Polymere mit einer guten Stabilität gegen thermischen Abbau in einer guten Raum-Zeit-Ausbeute. Bei diesen hohen Polymerisationstemperaturen erhält man jedoch, bedingt durch hohe Anteile an isotaktischen Triaden, ein Polymerisat mit geringer Wärmeformbeständigkeit.

Eine technische Lehre zur Überwindung dieses Problems gibt EP-PS 245 647 (= US-Patent 4 877 853). Dort wird eine thermoplastisch verarbeitbare Polymethacrylat-Formmasse mit gleichzeitig hoher Wärmeformbeständigkeit und hoher Stabilität gegen thermischen Abbau beschrieben, wobei ein Anteil von mehr als 60 % syndiotaktischen Triaden vorliegt, vorzugsweise ein Initiator-Regler-Verhältnis von höchstens 1 : 2 oder bevorzugt noch wesentlich geringer vorliegt, wobei die Polymethacrylat-Formmasse bei Temperaturen zwischen 0 und 100 ° C durch Emulsionspolymerisation hergestellt wird.

Kontinuierliche Polymerisationsverfahren, die mit niedrigeren Umsätzen und hohen Polymerisationstemperaturen bei guten Raum-Zeit-Ausbeuten arbeiten, sind beispielsweise in Jpn. Kokai Tokkyo Koho JP 04,146,903 dargestellt, wo die Polymerisation von Methylmethacrylat bis zu Umsätzen von 20 bis 50 %, die anschließende Monomerentgasung sowie die Endpolymerisation des Polymersirups zu Polymethylmethacrylat-Platten mit guten optischen Eigenschaften beschrieben werden.

US-Patent 2,974,125 umfaßt die Herstellung von Copolymerisaten aus Methylmethacrylat, Styrol und Acrylnitril, wobei die Polymerisation bei Temperaturen zwischen 130 und 155 °C bis zu Umsätzen zwischen 10 und 50 % geführt wird. Die nicht umgesetzten Monomeren werden vorzugsweise durch Entgasen entfernt und die resultierenden Polymerisate zeichnen sich durch hohe Reißdehnungswerte aus.

In DE-AS 25 04 417 wird ein Verfahren zur Herstellung von Methylmethacrylat-Polymerisaten beschrieben, enthaltend mindestens 80 Gew.-% Methylmethacrylat-Einheiten, wobei die Monomeren bei Temperaturen zwischen 150 und 180 °C bis zu ca. 50 bis 80 % im Rührreaktor umgesetzt werden und die nicht umgesetzten Monomeren durch Anlegen eines Vakuums entfernt werden. Die resultierenden Polymerisate sind weitgehend frei von Restmonomeren und Oligomeren bis zu einem Molekulargewicht von 1,66·10⁻²⁴ kg (1000 Dalton).

US-Patent 4 711 938 umfaßt ein kontinuierliches Verfahren zur Herstellung von Polymethylmethacrylat bzw. Methylmethacrylat-haltigen Copolymerisaten bei Polymerisationstemperaturen von 140 bis 170 °C und Umsätzen von bis zu 50 %, wobei die Restmonomeren ebenfalls durch Anlegen eines Vakuums entfernt werden. Die resultierenden Polymerisate zeichnen sich durch eine hohe optische Reinheit und eine enge Molekulargewichtsverteilung aus.

In US-Patent 3 637 545 wird die Herstellung von Polymethylmethacrylat mittels kontinuierlicher Massepolymerisation bei Temperaturen zwischen 145 und 165 °C und Umsätzen zwischen 40 und 60 % beschrieben. Wiederum werden die Restmonomeren durch Entgasen entfernt, wobei in einer weiteren Ausführungsform der Erfindung während der Reaktion Elastomerteilchen anwesend sein können.

In EP-Patentschrift 0 319 622 B1 wird ein Verfahren zur kontinuierlichen Lösungspolymerisation von (Meth)acrylsäueestern beschrieben, das folgende Schritte umfaßt: (a) Zugabe von Monomeren, Polymerisationshilfsmitteln und Lösungsmitteln solchermaßen, daß der Polymergehalt der Reaktionsmischung unter 50 Gew-% bleibt, (b) Reaktionstemperaturen von 60 bis 130 °C und ausreichenden Verweilzeiten, um eine 20 bis 95 %ige Umsetzung der Monomeren zu gewährleisten, (c) Übertragung des Polymerisats in einen anderen Polymerisationsreaktor zur (d) Folgepolymerisation bei Reaktionstemperaturen zwischen 60 und 130 °C, (e) Übertragung des in (d) entstandenen Rohpolymerisats in einen Endpolymerisationsreaktor, in dem die nicht polymerisierten Bestandteile der Reaktionsmischung durch Flash-Entgasung entfernt werden, sowie (f) eine spezielle Aufbereitung des Endpolymerisats.

EP-PS 656 374 beschreibt ein vorzugsweise diskontiniuerliches Verfahren zur Herstellung von Polymethacrylat-Formmassen mit hoher Wärmeformbeständigkeit und hoher Stabilität gegen thermischen Abbau, wobei mindestens 70 % der Formmasse bei einer Monomerkonzentration von mehr als 5 mol Methacrylat pro Liter Reaktionsmischung hergestellt werden. In diesem Verfahrens werden Monomerumsätze von ca. 40 - 50 % erzielt.

GB-PS 1 013 688 (Sterling) beschreibt die Herstellung von Polymethylmethacrylat-Polymerisaten mittels eines dreistufigen Verfahrens. In der dritten Stufe erfolgt die vollständige Polymersation der eingesetzten Monomere. Das Verfahren kann somit nicht kontinuierlich betrieben werden.

JP 59-210 911 A ref. beschreibt ein Verfahren zur Herstellung eines Polymethylmethacrylat-Sirups, der sich durch gute Lagerfähigkeit auszeichnet. Die Verweilzeiten in den Reaktoren liegen im Sekundenbereich, der Monomerumsatz wird mit 25,4 % angegeben. Eine Abtrennung nicht umgesetzter Monomere erfolgt nicht. Anders als bei der vorliegenden Erfindung wird auf den Einsatz eines Molekulargewichtsreglers verzichtet.

### Aufgabe und Lösung

Die Herstellung von Polymethacrylat-Formmassen mit hoher Wärmeformbeständigkeit und hoher Stabilität gegen thermischen Abbau wird in EP 656 374 im Prinzip hervorragend gelöst. Technisch wünschenswert wäre jedoch auch ein kontiniuierliches Verfahren mit noch höheren Umsatzraten, bei dem Polymethacrylat-Formmassen mit vergleichbar hoher Wärmeformbeständigkeit und Stabilität gegen thermischen Abbau erhalten werden können. Es stellte sich daher die Aufgabe ein entsprechend verbessertes Verfahren zu entwickeln.

Die Aufgabe wurde gelöst durch ein halbkontinuierliches oder kontinuierliches Verfahren zur Herstellung von Polymethacrylat-Formmassen, bestehend zu mehr als 80 Gew.-% aus Methylmethacrylat-Monomeren, mit einer Vicaterweichungstemperatur VST nach ISO 306 Verfahren B von **mindestens** 110 °C und einem TD-Wert von > 290 °C, durch radikalische Polymerisation von Methylmethacrylat-Monomeren und gegebenenfalls üblicher geeigneter Comonomeren in mindestens zwei hintereinander betriebenen Reaktoren, in denen ein hoher Durchmischungsgrad gewährleistet ist, wobei der Anteil der Polymerisationsinitiatoren bezogen auf die Ausgangsstoffe **10**^{**-4**} bis 0,08 Gew.-% beträgt und der Anteil des Molekulargewichtsreglers bezogen auf das Reaktionsgemisch zwischen 0,1 und 2 Gew.-% liegt, dadurch gekennzeichnet, daß
a) ein erster Reaktor bei einer Temperatur unter 120 °C
   und
b) ein zweiter oder weitere darauffolgende Reaktoren in einem Temperaturbereich von mehr als 130 und höchstens 200 °C betrieben wird bzw. werden und
c) die nicht umgesetzten Monomeren in einem darauffolgenden separaten Prozeßschritt durch Vakuumentgasung abgetrennt und dem Verfahren zumindest teilweise wieder zugeführt werden.

Völlig unerwartet war es, daß trotz der vergleichsweise hohen Temperaturen ab der zweiten Reaktorstufe, die theoretisch die Ausbildung isotaktischer Triaden begünstigen sollte und damit eher zu einer Verschlechterung der Wärmeformbeständigkeit beitragen sollte, Formmassen mit vergleichbar guten Eigenschaften wie in der EP 656 374 erhalten werden. Die kontiniuierliche Prozeßführung erlaubt überdies noch eine deutliche Erhöhung der Umsatzraten. Überraschend ist auch, daß ab der zweiten Reaktorstufe optional auf eine erneute Zugabe von Polyrnerisationsinitiator verzichtet werden kann. Möglicherweise bilden sich in der ersten Reaktorstufe auf noch nicht verstandene Weise unter Einwirkung der eingesetzten Polymerisationsinitiatoren neue polymerisationsinitiierende Verbindungen, die in der zweiten Reaktionsstufe wirksam sind.

Das Verfahren wird in Rührreaktoren mit hohem Durchmischungsgrad durchgeführt. Die Polymerisationstemperaturen in der ersten Reaktorstufe liegen dabei unter 120° C, vorzugsweise zwischen 30 und 110° C, besonders bevorzugt zwischen 60 und 100° C. In dieser Stufe werden Umsätze bis ca. 40 % erreicht. Das Reaktionsgemisch wird dann in den zweiten bzw. weitere Reaktoren überführt und dort weiterpolymerisiert. Optional kann eine erneute Zugabe von Polymerisationsinitiator erfolgen. In diesen weiteren Reaktorstufen liegen die Polymerisationstemperaturen bei über 130 und bis zu 200° C. Bevorzugt werden Polymerisationstemperaturen von 130 - 180° C, inbesondere von 140 - 160° C angewendet. Insgesamt werden so bis zu 70 % der Monomeren zu Polymethacrylatpolymeren umgesetzt. Die Polymethacrylatpolymere bestehen zu mehr als 80 Gew.-% aus Methylmethacrylat, bevorzugt mehr als 95 Gew.-% und insbesondere zu mehr als 98 Gew.-% aus Methylmethacrylat. Nach Beendigung der Polymerisation werden nicht umgesetzte Monomere durch Entgasen in einem Extruder entfernt und gleichzeitig das Polymerisat ausgetragen. Die abgetrennten Monomeren werden wieder in der ersten Reaktorstufe des Verfahrens eingesetzt. Mit Hilfe des erfindungsgemäßen Verfahrens können in hohen Ausbeuten Polymethacrylatpolymere hergestellt werden, die eine ausgezeichnete Wärmeformbeständigkeit und eine hohe Stabilität gegen thermischen Abbau aufweisen

### Ausführung der Erfindung

Das erfindungsgemäße Verfahren wird kontiniuierlich mit Hilfe von zwei Reaktoren, die mit Rühraggregaten ausgerüstet sind, durchgeführt. Geeignet sind beispielsweise

Rührreaktoren mit Blatt-, Anker-, Scheiben- oder Impeller-Rührern (vgl. hierzu beispielsweise: Kirk-Othmer, Encyclopedia of Chemical Technology, Vol. 19, Seiten 880 bis 914, John Wiley & Sons, New York, 1982). Desweiteren können kontinuierliche Reaktoren, wie Strömungsrohre, die vorzugsweise turbulent durchströmt werden, oder Schneckenförderaggregate, vorzugsweise Doppelschneckenextruder mit einem engen Verweilzeitspektrum, zum Einsatz kommen. Es werden Rührreaktoren verwendet, bei denen die Rühraggregate einen hohen Durchmischungsgrad gewährleisten. Die nicht umgesetzten Monomeren werden durch Vakuumentgasungsverfahren, wie beispielsweise Flash-Entgasung durch diskontinuierliches Anlegen eines Vakuums oder bevorzugt durch kontinuierliche Entgasung in einem Extruder bei angelegtem Vakuum, aus der Reaktionsmischung entfernt.

Als erfindungsgemäße Polymethacrylat-Formmassen werden solche Massen verstanden, an deren Aufbau mehr als 80 Gew.-% Methylmethacrylat beteiligt sind, insbesondere solche mit mehr als 95 Gew.-% und vorzugsweise solche, die 98 bis 100 Gew-% Methylmethacrylat als Mlonomerbaustein enthalten. Gegebenenfalls sind noch Comonomere wie Acrylsäureester, vorzugsweise mit C₁-C₈-Alkyl im Esterrest, Methacrylsäureester, vorzugsweise mit C₂-C₈-Alkyl im Esterrest, (Meth)acrylnitril, (Meth)acrylsäureamide, Styrol bzw. substituierte Styrole, Vinylester oder Vinylamide, Maleinsäure oder deren Derivate sowie gegebenenfalls noch andere copolymerisierbare Monomere anwesend (vgl. hierzu beispielsweise H. Rauch-Puntigam, Th. Völker, Acryl- und Methacrylverbindungen, Springer, Heidelberg, 1967).

Die Wärmeformbeständigkeit handelsüblicher Formmassen kann in etwa durch eine Vicat-Erweichungstemperatur VST nach ISO 306 Verfahren B von ca. 108 °C charakterisiert werden. Unter hochwärmeformbeständigen Formmassen sind solche zu verstehen, die VST-Werte von mindestens 110 °C, bevorzugt > 111 °C, besonders bevorzugt > 112° C aufweisen. Eine hohe Stabilität der Formmasse gegenüber thermischer Zersetzung liegt ab einem TD-Werte von etwa 290° C, bevorzugt > 300° C und insbesondere ab 320 °C vor. Der TD-Wert ist dabei diejenige Temperatur gemessen in Grad Celsius, bei der eine Polymerprobe nach Konditionierung über einen Zeitraum von 16 Stunden bei 140° C während einer dynamischen gravimetrischen Messung auf einer Thermowaage unter Stickstoffatmosphäre mit einer Aufheizgeschwindigkeit von 5 Grad/Minute 2 % Gewichtsverlust zeigt.

### Das Polymerisationsverfahren

Als Polymerisationsinitiatoren werden die an sich für die radikalische Polymerisation von Methacrylaten üblichen verwandt, beispielsweise Azoverbindungen, wie Azodiisobutyronitril, sowie Peroxide, wie Dibenzoylperoxid oder Dilauroylperoxid, oder auch andere Peroxidverbindungen, wie beispielsweise t-Butylperoctanoat oder Perketale, wie auch gegebenenfalls Redoxinitiatoren (vgl. hierzu beispielsweise H. Rauch-Puntigam, Th. Völker, Acryl- und Methacrylverbindungen, Springer, Heidelberg, 1967 oder Kirk-Othmer, Encyclopedia of Chemical Technology, Vol. 1 Seiten 286 ff, John Wiley & Sons, New York, 1978). Die Polymerisationsinitiatoren werden in Mengen von 10⁻⁴ bis 0,08 Gew.-% bezogen auf die Ausgangsstoffe, besonders bevorzugt in Mengen von 2 x 10⁻⁴ bis 0,08 Gew.-% und besonders bevorzugt in Mengen von 10⁻³ bis 0,05 Gew.-% eingesetzt.

Als Molekulargewichts- oder Kettenübertragungsregler werden ebenfalls an sich übliche Verbindungen, insbesondere Mercaptane vom Typ R-SH verwendet, wobei R für eine ggfs. cyclische oder verzweigte Alkylgruppe mit 2 bis 20 Kohlenstoffatomen stehen kann. Als Beispiele können n-Butylmercaptan, Dodecylrnercaptan, Ester der Thiopropionsäure, Ester der Thioglykolsäure oder auch polyfunktionelle Mercaptane mit 2 bis 6 SH-Gruppen genannt werden. Die Molekulargewichtsregler werden in Mengen von 0,1 bis 2 Gew.-% bezogen auf die Ausgangsstoffe eingesetzt (vgl. hierzu auch H. Rauch-Puntigam, Th. Völker, Acryl- und Methacrylverbindungen, Springer, Heidelberg, 1967). Weiterhin können beispielsweise auch andere Verbindungen wie CCl₄ oder Benzylbromid für die Molekulargewichtsregelung genutzt werden.

Bevorzugt werden allerdings Regler des Typs R-SH oder R'-H, wobei R' für Alkyl, Cycloalkyl oder Aralkyl mit 5 bis 30 Kohlenstoffatomen stehen kann, wie beispielsweise Cumol, die in der Lage sind, die wachsende Polymerkette mit einem H-Atom zu terminieren. Besonders gut geeignete Molekulargewichtsregler sind z.B. Dodecylmercaptan, Methyl-3-mercaptopropionat oder n-Butylmercaptan.

Durch das Zusammenwirken von Initiator und Polymerisationsregler wird der Polymerisationsgrad des erzeugten Homo- oder Copolymerisats in an sich bekannter Weise bestimmt. Technische Polymethylmethacrylat-Formmassen zum Extrudieren, Spritzgießen oder für die Folienherstellung weisen üblicherweise Molekulargewichte von (1,66 bis 3,32) · 10⁻²² kg (100 000 bis 200 000 Dalton) (Gewichtsmittel) bzw. Viscositätszahlen von ca. 45 bis 80 ml/g, gemessen nach ISO 1628-6 in Chloroform bei 25° C, auf.

Bei dem erfindungsgemäßen Polymerisationsverfahren geht man von den reinen Monomeren bzw. den Monomermischungen aus, die neben den Polymerisationsinitiatoren und den Molekulargewichtsreglern gegebenenfalls noch weitere Zuschlagstoffe wie beispielsweise Formtrennmittel, Farbstoffe oder Trübungsmittel in Mengen bis zu 10 Gew.-%, bevorzugt in Mengen bis zu 5 Gew.-% bezogen auf die eingesetzten Monomeren enthalten können.

Die Reaktion wird bevorzugt in Gegenwart hoher Monomerkonzentrationen ohne Zusatz von Lösungsmitteln ausgeführt. Bevorzugt werden die Monomere in Konzentrationen von ca. 4 - 5 mol pro Liter Reaktionsmischung eingesetzt. Besonders geeignet für das erfindungsgemäße Verfahren sind intensiv durchmischte Rührreaktoren. Die Polymerisationstemperaturen im ersten Reaktor liegen unter 120 °C, vorzugsweise zwischen 30 und 110 °C, besonders bevorzugt zwischen 60 und 100 °C. Für das Aufheizen der Reaktionsmischung auf die Polymerisationstemperatur werden an sich übliche Methoden des Wärmeeintrags in Reaktoren, wie beispielsweise Druckdampfwärmetauscher und/oder bevorzugt die freiwerdende Polymerisationsenthalpie benutzt. Die Polymerisationsdauer in der ersten Reaktorstufe kann ca. 15 bis 180 min betragen. Günstig ist z.B.eine Polymerisationsdauer von ca. 120 min. In dieser Zeit können Monomerumsätze von bis zu 40 % erreicht werden. Das Reaktionsgemisch wird dann in einen zweiten Reaktor überführt und dort weiterpolymerisiert. Überraschenderweise wurde gefunden, daß eine erneute Zugabe von Polymerisationsinitiator zur Weiterführung der Polymerisation meist nicht notwendig ist. Diese kann jedoch optional erfolgen. In dieser zweiten bzw weiteren Reaktorstufen liegen die Polymerisationstemperaturen bei über 130 und bis zu 200° C. Bevorzugt werden Polymerisationstemperaturen von 130 - 180° C, insbesondere von 140 - 160° C angewendet. Insgesamt werden so bis zu 70 % der ursprünglich eingesetzten Monomeren zu Polymethacrylatpolymeren umgesetzt. Das Verweilzeitverhältnis des Reaktionsgemisches im ersten Reaktor zum zweiten bzw. den weiteren Reaktoren insgesamt, liegt bevorzugt bei mindestens 1,5 zu 1. Die Polymerisationsdauer in der ersten Reaktorstufe kann z. B. 15 bis 180 min betragen. Nach einer Polymerisationsdauer von 10 bis 120 min in der zweiten bzw. in den weiteren Reaktorstufen insgesamt, kann die Reaktion abgebrochen werden. Besonders bevorzugt wird ein zweistufiges Verfahren.

Der Abbruch der Polymerisationsreaktion kann beispielsweise durch schnelles Entfernen der nicht umgesetzten Monomeranteile, wie z.B. durch Vakuumentgasung im Reaktor, Filmverdampfung in einem Dünnschichtverdampfer oder durch entgasende Extrusion des Reaktionsgemisches erfolgen.

Die nicht umgesetzten Mlonomeranteile werden nach der Reaktion in der schon zuvor beschriebenen Weise entfernt. Als Verfahren wird die Vakuumentgasung eingesetzt, bei der die nicht umgesetzten Monomeranteile zurückgewonnen werden und einer erneuten Reaktion zugeführt werden. Bevorzugt ist die Entgasung des Reaktionsgemischs durch Extrusion, vorzugsweise in einem Ein- oder Doppelschneckenextruder mit einer oder bevorzugt mehreren Vakuumzonen.

In einer bevorzugten Ausführungsform der Erfindung wird das Reaktionsgemisch aus Polymethacrylat-Polymerisat und nicht umgesetzten Monomeren nach Beendigung der Reaktion kontinuierlich aus dem letzten Polymerisationsreaktor ausgetragen und einem Entgasungsextruder zugeführt, in dem die nicht umgesetzten Monomeranteile abgezogen werden, die nach Kondensation erneut der Reaktion wieder zugeführt werden können. Nach dem Durchlaufen der Entgasungszone bzw. -zonen, wird die entgaste Formmassenschmelze in einer Kompressionszone des Extruders auf hohen Druck gebracht und zu z. B. einem Strang oder Strangbündel extrudiert. Die Polymerstränge werden in üblicher Weise unter die Erweichungstemperatur gekühlt und zu einem handelsfähigen Formmassengranulat zerteilt. Die Kühlung kann hierbei vor, während oder nach der Zerteilung vorgenommen werden.

Eine Ausführungsform ist die halbkontinuierliche Herstellung der Polymethacrylat-Formmasse durch zeitlich verschobene Polymerisation in mehreren Rührreaktoren, wobei besonders bevorzugt Puffergefäße, wie beispielsweise Wartekessel, verwendet werden, um einen kontinuierlichen Betrieb des Entgasungsextruders zu gewährleisten.

In einer besonders bevorzugten Ausführungsform wird die Polymerisation kontinuierlich in einer zweistufigen Polymerisationskesselkaskade derart ausgeführt, daß die in dem jeweiligen Polymerisationsreaktor frei werdende Reaktionswärme gerade dazu ausreicht, die dem Reaktor zugeführte Monomer- oder Monomer/Polymermischung auf die Reaktionstemperatur zu erwärmen. Bei dieser Ausführungsform muß von außen weder Wärme zu- noch abgeführt werden. Diese Verfahrensweise ist nicht nur besonders energiesparend, es wird auch festgestellt, daß eine Belagbildung durch Polymerisatansatz an der Reaktorwand (Fouling) nicht auftritt.

Für eine zweistufige Polymerisationsführung, ausgehend von Methylmethacrylat bzw. einer Monomerenmischung aus Methylmethacrylat und weiteren Comonomeren mit einer Temperatur im Bereich von -20° C bis +2.0° C heißt dies, daß beispielsweise der erste Reaktor bei 90° C und einem Umsatz im stationären Zustand im Bereich von 25 - 40 % betrieben wird, während der zweite Reaktor z. B. bei 150° C bei einem Umsatz im stationären Zustand im Bereich von >40 - 70 % gehalten wird.

### Vorteilhafte Wirkungen der Erfindung

Mit dem erfindungsgemäßen Verfahren können Polymethacrylat-Formmassen mit hohen Wärmeformbeständigkeiten, d.h. Wärmeformbeständigkeiten von mindestens 110 °C, gemessen als Vicat-Erweichungstemperatur nach ISO 306 Verfahren B, hergestellt werden. Bevorzugt werden Polymethacrylat-Formmassen gewonnen, die Vicat-Erweichungstemperaturen von mehr als 111 °C, insbesondere > 112 °C aufweisen.

Die hohe thermische Stabilität der Polymethacrylat-Formmassen mit TD-Werten > 290 °C, bevorzugt > 300 °C und insbesondere > 320 °C verhindert einen thermischen Abbau der Formmassen bei thermoplastischer Verarbeitung. Die durch das erfindungsgemäße Verfahren herstellbaren Formmassen kommen daher bevorzugt dort zum Einsatz, wo hohe Verarbeitungsstabilität, geringer Restmonomerengehalt im fertigen Formkörper und ggf. auch hohe Lichtdurchlässigkeit gefordert sind. Ein bevorzugtes Anwendungsgebiet sind daher höher temperaturbeanspruchte Leuchtenabdeckungen, Kraftfahrzeug-Heck- und Blinkleuchtenabdeckungen und ferner der gesamte Haushaltssektor.

Das zweistufige Verfahren zur Herstellung der Polymethacrylat-Formmassen ist technisch weitgehend problemlos durchzuführen. Die nicht umgesetzten Monomeren können auf einfache Weise, beispielsweise durch Vakuumdestillation, vom Formmassen-Polymerisat abgetrennt werden und erneut zur Polymerisation eingesetzt werden. Ein besonderer Vorteil des Verfahrens liegt in den vergleichsweise hohen Umsatzraten unter Erhalt der hohen Wärmeformbeständigkeit der Formmasse, sowie in der energiesparenden Ausnutzung der Polymerisationswärme und dem geringen Initiatorverbrauch. Optional ist es möglich auf eine erneute Dosierung von Polymerisationsinitiator in der zweiten Reaktorstufe zu verzichten, was das Verfahren insgesamt weiter vereinfacht.

### BEISPIELE

### Beispiel 1

Eine Mischung aus 100 Gewichtsteilen (T) Methylmethacrylat, 0,02 T tert.-Butylpemeodecanoat und 0,25 T 3-Mercaptopropionsäuremethylester wird kontinuierlich in einer Menge von 1250 g/h in einen auf 90° C gehaltenen Rührreaktor mit einem Volumen von 2,4 I eingeführt. Im stationären Zustand hat das Reaktionsgemisch in diesem ersten Reaktor einem Polymerisatgehalt von etwa 38 %.

Eine dem Zustrom entsprechende Menge des Reaktionsgemisches wird kontinuierlich abgenommen und einem auf 150° C gehaltenen zweiten Rührreaktor mit einem Volumen von 0,6 l zugeführt. Der Polymerisatgehalt des Reaktionsgemisches beträgt im stationären Zustand in diesem zweiten Reaktor ca. 58 %.

Eine dem Zustrom entsprechende Menge des Reaktionsgemisches wird kontinuierlich aus dem zweiten Reaktor abgenommen, in einem Wärmetauscher auf 195° C erwärmt und einem üblichen Entgasungsextruder zugeführt. Es wird ein Einschneckenextruder mit einem Schneckendurchrnesser von 20 mm verwendet, der im Temperaturbereich von 250 - 260° C und bei absteigenden Drücken von 1000 bis 20 mbar (Vakuum) betrieben wird. Die Monomerdämpfe werden abgezogen, kondensiert und zur Erzeugung des Ausgangsgemisches zurückgeführt. Die Polymerisatschmelze wird zu Rundsträngen von 2 - 4 mm Dicke extrudiert, die durch ein Wasserbad geführt und nach Abkühlung unter die Erweichungstemperatur zu einem Granulat zerteilt werden. Das Granulat der Polymethylmethacrylatformmasse ist glasklar und weist eine Lösungsviskosität in Chloroform nach ISO 1628-6 von 52 cm³/g bei 25° C auf.

Aus dem auf diesem Wege erhaltenen Formmassegranulat werden Prüfkörper durch Spritzguß hergestellt. Dabei findet man an, bei einer Verarbeitungstemperatur von 250° C hergestellten Prüfkörpern nach einer Vorkonditionierung über 16 h bei 80° C eine Vicaterweichungstemperatur nach ISO 306 Verfahren B von 113,5° C. Der Restmonomergehalt liegt nach Spritzgußverarbeitung gemäß den oben genannten Bedingungen bei<0,5%.

Als Maß für die hohe Thermostabilität der PolymethylmethacrylatFormmasse wird die Temperatur für den 2 %-igen Gewichtsverlust TD bestimmt. Der TD-Wert ist dabei diejenige Temperatur gemessen in °C, bei der eine Polymerprobe nach Konditionierung über einen Zeitraum von 16 h bei 140° C während einer dynamischen gravimetrischen Messung auf einer Thermowaage unter Stickstoffatmosphaere mit einer Aufheizgeschwindigkeit von 5° C/ min einen Gewichtsverlust von 2 % aufweist. An der beschriebenen Formmasse wird ein TD-Wert von 328° C gemessen.

### Beispiel 2

Es wird verfahren wie im Beispiel 1, jedoch wird eine Monomer-Mischung aus 99 T Methylmethacrylat und 1 T Methylacrylat sowie 0,02 T tert.-Butylpemeodecanoat und 0,25 T 3-Mercaptopropionsäuremethylester eingesetzt. Das erhaltene Formmassengranulat ist glasklar und weist eine Lösungsviskosität in Chloroform nach ISO 1628-6 von 52 cm³/g auf. An Analog zu Beispiel 1 hergestellten Spritzgußkörpern wird eine Vicat-Erweichungstemperatur nach ISO 306, Verfahren B, von 112,8° C gefunden. Der Restmonomerengehalt liegt nach Spritzgußverarbeitung bei < 0,5 %. An dieser Formmasse wird ein TD-Wert von 330° C gemessen.

## Patentansprüche

1. Halbkontinuierliches oder kontinuierliches Verfahren zur Herstellung von Polymethacrylat-Formmassen, bestehend zu mehr als 80 Gew.-% aus Methylmethacrylat-Monomeren, mit einer Vicaterweichungstemperatur VST nach ISO 306 Verfahren B von **mindestens** 110 °C und einem TD-Wert von > 290 °C, durch radikalische Polymerisation von Methylmethacrylat-Monomeren und gegebenenfalls üblicher geeigneter Comonomeren in mindestens zwei hintereinander betriebenen Reaktoren, in denen ein hoher Durchmischungsgrad gewährleistet ist, wobei der Anteil der Polymerisationsinitiatoren bezogen auf die Ausgangsstoffe **10**^{**-4**} **bis** 0,08 Gew.-% beträgt und der Anteil des Molekulargewichtsreglers bezogen auf das Reaktionsgemisch zwischen 0,1 und 2 Gew.-% liegt, **dadurch gekennzeichnet**, daß
a) ein erster Reaktor bei einer Temperatur unter 120 °C
und
b) ein zweiter oder weitere darauffolgende Reaktoren in einem Temperaturbereich von mehr als 130 und höchstens 200 °C betrieben wird bzw. werden und
c) die nicht umgesetzten Monomeren in einem darauffolgenden separaten Prozeßschritt durch Vakuumentgasung abgetrennt und dem Verfahren zumindest teilweise wieder zugeführt werden.

2. Verfahren nach Anspruch 1, **dadurch gekennzeichnet**, daß der erste Reaktor in einem Temperaturbereich von 30 bis 110 °C betrieben wird.

3. Verfahren nach Anspruch 2, **dadurch gekennzeichnet**, daß der erste Reaktor in einem Temperaturbereich von 60 bis 100 °C betrieben wird.

4. Verfahren nach einem oder mehreren der Ansprüche 1 bis 3, **dadurch gekennzeichnet**, daß der zweite oder weitere Reaktoren in einem Temperaturbereich von 130 bis 180 °C betrieben wird bzw. werden.

5. Verfahren nach einem oder mehreren der Ansprüche 1 bis 4, **dadurch gekennzeichnet**, daß der zweite oder weitere Reaktoren in einem Temperaturbereich von 140 bis 160 °C betrieben wird bzw. werden.

6. Verfahren nach einem oder mehreren der Ansprüche 1 bis 5, **dadurch gekennzeichnet**, daß die Polymethacrylat-Formmassen zu mehr als 95 Gew-% aus Methylmethacrylat-Monomeren bestehen.

7. Verfahren nach einem oder mehreren der Ansprüche 1 bis 6, **dadurch gekennzeichnet**, daß die Polymerisation im wesentlichen ohne zusätzliche Energiezufuhr oder Kühlung betrieben wird.

8. Verfahren nach einem oder mehreren der Ansprüche 1 bis 7, **dadurch gekennzeichnet**, daß das Verweilzeitverhältnis des Reaktionsgemisches im ersten Reaktor zum zweiten bzw. den darauffolgenden Reaktoren mindestens 1,5 zu 1 beträgt.

9. Verfahren nach einem oder mehreren der Ansprüche 1 bis 8, **dadurch gekennzeichnet**, daß zwei Reaktoren verwendet werden.

10. Verfahren nach Anspruch 9, **dadurch gekennzeichnet**, daß der Umsatz bezogen auf die eingesetzten Monomeren im ersten Reaktor 20 bis 40 % und im zweiten Reaktor > 40 bis 70 % beträgt.

11. Verfahren nach einem oder mehreren der Ansprüche 1 bis 10, **dadurch gekennzeichnet**, daß die hergestellten Polymethacrylat-Formmassen eine Vicaterweichungstemperatur VST von > 111 °C und einen TD-Wert von > 300 °C aufweisen.

## Claims

1. Semicontinuous or continuous process for preparing polymethacrylate moulding compositions, consisting of more than 80% by weight of methylmethacrylate monomers, having a Vicat softening temperature VST according to ISO 306 Method B of at least 110°C and a TD value of >290°C, by radical polymerisation of methylmethacrylate monomers and optionally conventional suitable comonomers in at least two reactors operated one after the other, in which a high level of mixing is guaranteed, the proportion of polymerisation initiators based on the starting materials being 10⁻⁴ to 0.08% by weight and the proportion of the molecular weight regulator based on the reaction mixture being between 0.1 and 2% by weight, **characterised in that**
a) a first reactor is operated at a temperature below 120°C and
b) a second reactor or succeeding reactors is or are operated in a temperature range from more than 130 up to a maximum of 200°C, and
c) the unreacted monomers are separated off by vacuum degassing in a subsequent separate step and are at least partly recycled into the process.

2. Process according to claim 1, **characterised in that** the first reactor is operated in a temperature range from 30 to 110°C.

3. Process according to claim 2, **characterised in that** the first reactor is operated in a temperature range from 60 to 100°C.

4. Process according to one or more of claims 1 to 3, **characterised in that** the second reactor or further reactors is or are operated in a temperature range from 130 to 180°C.

5. Process according to one or more of claims 1 to 4, **characterised in that** the second reactor or other reactors is or are operated in a temperature range of from 140 to 160°C.

6. Process according to one or more of claims 1 to 5, **characterised in that** the polymethacrylate moulding compositions consist of more than 95% by weight of methylmethacrylate monomers.

7. Process according to one or more of claims 1 to 6, **characterised in that** the polymerisation is effected substantially without any additional supply of energy or cooling.

8. Process according to one or more of claims 1 to 7, **characterised in that** the retention time ratio of the reaction mixture in the first reactor to the second or succeeding reactors is at least 1.5 to 1.

9. Process according to one or more of claims 1 to 8, **characterised in that** two reactors are used.

10. Process according to claim 9, **characterised in that** the conversion, based on the monomers used, is 20 to 40% in the first reactor and >40 to 70% in the second reactor.

11. Process according to one or more of claims 1 to 10, **characterised in that** the polymethacrylate moulding compositions produced have a Vicat softening temperature VST of >111°C and a TD value of >300°C.

## Revendications

1. Procédé continu ou semi-continu pour la préparation de matières à mouler à base de polyméthacrylate, consistant à raison de plus de 80 % en poids en monomères de type méthacrylate de méthyle, ayant une température de ramollissement Vicat VST selon ISO 306, méthode B, d'au moins 110°C, et un indice TD de > 290°C, par polymérisation radicalaire de monomères de type méthacrylate de méthyle et éventuellement de comonomères appropriés usuels, dans au moins deux réacteurs fonctionnant l'un derrière l'autre, dans lesquels un haut degré d'homogénéisation est assuré, la proportion des amorceurs de polymérisation, par rapport aux produits de départ, allant de 10⁻⁴ à 0,08 % en poids, et la proportion du régulateur de masse moléculaire, par rapport au mélange réactionnel, étant comprise entre 0,1 à 2 % en poids,
**caractérisé en ce que**
a) on fait fonctionner un premier réacteur à une température inférieure à 120°C et
b) un second réacteur, ou d'autres réacteurs y faisant suite, dans une plage de températures de plus de 130 et au maximum de 200°C, et
c) les monomères n'ayant pas réagi sont séparés par dégazage sous vide, dans une étape de processus distincte y faisant suite, et renvoyés au moins en partie au processus.

2. Procédé selon la revendication 1,
**caractérisé en ce qu**'
on fait fonctionner le premier réacteur dans une plage de températures de 30 à 110°C.

3. Procédé selon la revendication 2,
**caractérisé en ce qu**'
on fait fonctionner le premier réacteur dans une plage de températures de 60 à 110°C.

4. Procédé selon une ou plusieurs des revendications 1 à 3,
**caractérisé en ce qu**'
on fait fonctionner le second réacteur ou les autres réacteurs dans une plage de températures de 130 à 180°C.

5. Procédé selon une ou plusieurs des revendications 1 à 4,
**caractérisé en ce qu**'
on fait fonctionner le second réacteur ou les autres réacteurs dans une plage de températures de 140 à 160°C.

6. Procédé selon une ou plusieurs des revendications 1 à 5.
**caractérisé en ce que**
les matières à mouler à base de polyméthacrylate consistent à raison de plus de 95 % en poids en monomères méthacrylate de méthyle.

7. Procédé selon une ou plusieurs des revendications 1 à 6,
**caractérisé en ce que**
la polymérisation est effectuée pratiquement sans apport d'énergie ni refroidissement supplémentaires.

8. Procédé selon une ou plusieurs des revendications 1 à 7,
**caractérisé en ce que**
le rapport du temps de séjour du mélange réactionnel dans le premier réacteur à celui dans le second réacteur ou dans les réacteurs y faisant suite est d'au moins 1,5:1.

9. Procédé selon une ou plusieurs des revendications 1 à 8.
**caractérisé en ce qu**'
on utilise deux réacteurs.

10. Procédé selon une ou plusieurs des revendications 1 à 9.
**caractérisé en ce que**
le taux de conversion, par rapport aux monomères utilisés, va de 20 à 40 % dans le premier réacteur, et de >40 à 70 % dans le second réacteur.

11. Procédé selon une ou plusieurs des revendications 1 à 10,
**caractérisé en ce que**
les matières à mouler à base de polyméthacrylate obtenues présentent une température de ramollissement Vicat VST de >111°C et une valeur TD de >300°C.
